**Europäisches Patentamt**

**European Patent Office**

**Office européen des brevets**

(19)

(11) Veröffentlichungsnummer : **0 050 748**
**B1**

(12) **EUROPÄISCHE PATENTSCHRIFT**

(45) Veröffentlichungstag der Patentschrift :
**11.04.84**

(21) Anmeldenummer : **81107827.8**

(22) Anmeldetag : **01.10.81**

(51) Int. Cl.³ : **H 04 M 11/06,** H 04 B  1/58,
H 04 Q 11/04

(54) **Analog-/Digital-Fernmelde-Teilnehmerstelle.**

(30) Priorität : **24.10.80 DE 3040263**

(43) Veröffentlichungstag der Anmeldung :
**05.05.82 Patentblatt 82/18**

(45) Bekanntmachung des Hinweises auf die Patenterteilung : **11.04.84 Patentblatt 84/15**

(84) Benannte Vertragsstaaten :
**AT BE CH FR GB IT LI NL SE**

(56) Entgegenhaltungen :
**EP-A- 0 037 518**
**DE-A- 2 847 599**
**DE-A- 3 008 886**
**IBM TECHNICAL DISCLOSURE BULLETIN, Band 19,
Nr. 7, Dezember 1976 NEW YORK (US) D. ESTEBAN:
"Hybrid Transmission System for Functional Digital
Telephones" Seiten 2571-2572
NTG FACHBERICHTE, Band 73, The International
Symposium on Sucscriber Loops and Services München, 15-19 September 1980 BERLIN (DE) I.G. EBERT
"Loop Evolution in a non-Fibre World", Seiten 217-223
NTG FACHBERICHTE, Band 73, The International
Symposium on Subscriber Loops and Services" München, 15-19 September 1980 BERLIN (DE) M.G. VRY et
al.: "The Design of a 1 + 1 System for Digital Signal
Transmission to the Subscriber", Seiten 36-40**

(73) Patentinhaber : **SIEMENS AKTIENGESELLSCHAFT
Berlin und München Wittelsbacherplatz 2
D-8000 München 2 (DE)**

(72) Erfinder : **Strehl, Herbert, Dipl.-Ing.
Drozzaweg 15
D-8000 München 70 (DE) .**

## Analog-/Digital-Fernmelde-Teilnehmerstelle

Um in einem Fernmeldesystem eine Kommunikation zwischen zwei Fernmeldestellen zu ermöglichen, sind zwischen den Fernmeldestellen Übertragungseinrichtungen erforderlich, die eine hinreichend störungsfreie Signalübertragung in beiden Übertragungsrichtungen ermöglichen. Hierzu kann für jede Übertragungsrichtung eine eigene, ggf. im Multiplexbetrieb auch für eine Mehrzahl gleichzeitig bestehender Verbindungen jeweils zweier Fernmeldestellen mehrfach ausgenutzte Übertragungsleitung vorgesehen sein ; ein solcher Vierdrahtbetrieb wird vorzugsweise in höheren Fernmeldenetzebenen vorgesehen sein. In unteren Fernmeldenetzebenen, insbesondere im Bereich der Teilnehmeranschlußleitungen, wird im allgemeinen eine Signalübertragung im Duplexbetrieb über Zweidrahtleitungen durchgeführt. Dabei kann zur Entkopplung der Übertragungssignale der beiden Übertragungsrichtungen eine Signalübertragung im Getrenntlageverfahren vorgesehen sein, indem man für die beiden Übertragungsrichtungen zeitlich und/oder in der Frequenzlage voneinander getrennte Übertragungskanäle vorsieht, und/oder es kann die Trennung der Übertragungssignale der beiden Übertragungsrichtungen mit Hilfe einer die Zweidrahtleitung abschließenden Gabelschaltung in Form einer Brückenschaltung bewirkt werden, die die Zweidrahtleitung beispielsweise in den vierdrähtigen Teil einer Teilnehmerendstelle (und umgekehrt) überführt.

Um eine vollständige Entkopplung des von der Gabelschaltung wegführenden Empfangszweiges der Vierdrahtleitung von dem zur Gabelschaltung hinführenden Sendezweig der Vierdrahtleitung zu erzielen, muß die Brückenschaltung abgeglichen sein, wozu sie eine exakte Nachbildung der Eingangsimpedanz der Zweidrahtleitung enthalten muß. In der Praxis enthalten die bei heute im Analog-Fernsprechnetz üblichen Analog-Fernsprechteilnehmerstellen vorgesehenen, die jeweilige Zweidraht-Anschlußleitung in einen vierdrähtigen Sprechstrom-/-Hörstrom-leitungszweig überführenden Analogsignal-Gabelschaltungen eine Kompromißnachbildung, die die (frequenzabhängige) Leitungsimpedanz nur in einem relativ schmalen Frequenzbereich hinreichend genau nachbildet, was indessen für den Analog-Fernsprechverkehr tragbar ist.

Neuere Entwicklungen der Fernmeldetechnik führen zu Digital-Fernmeldesystemen, die für Fernsprechteilnehmer eine Wandlung der Sprachsignale in digitale Signale (und umgekehrt) bereits in der Teilnehmerstelle vorsehen und in denen über Digital-Vierdraht-Vermittlungsstellen Digital-Fernsprechverbindungen in einheitlichen Kommunikationskanälen mit einer Bitrate von vorzugsweise 64 kbit/s (je Übertragungsrichtung) aufbaubar sind, wobei außerhalb (« out-slot ») dieses 64-kbit/s-Kommunikations-Kanals eine Signalisierungsverbindung für eine sogenannte « out-slot »-Signalisierung in einem zusätzlichen Signalkanal (Teilnehmersignalkanal) mit einer Bitrate von beispielsweise 8 kbit/s (je Übertragungsrichtung) ständig bestehen kann (ISS'79, 773, 777 ; telcom report 2 (1979) 4, 254, 259). Außer Sprache können auch Texte, Daten und Bilder übertragen werden ; eine solche Übertragung und Vermittlung) von Digitalsignalen ist in einem zukünftigen dienstintegrierten Fernmeldenetz (ISDN) zu erwarten.

Gegenwärtig und in naher Zukunft werden indessen sowohl für Orts-Vermittlungsstellen als auch für Nebenstellenanlagen noch die heute im Analog-Fernsprechnetz üblichen Zweidraht-Vermittlungsstellen eingesetzt sein, an die über Zweidraht-Anschlußleitungen jeweils mit einer im Zweidrahtleitungszweig liegenden Signalisierungsschaltung und einer den Zweidrahtleitungszweig abschließenden Analogsignal-Gabelschaltung versehene Analog-Fernsprech-Teilnehmerstellen angeschlossen sind. Bei Einführung und weiterer Vervollständigung eines dienstintegrierten Digitalnetzes wird daher bereits eine große Anzahl solcher Fernmeldesysteme im Rahmen des herkömmlichen Analog-Fernmeldenetzes in Betrieb sein ; dabei in zweckmäßiger Weise auch die Vorteile digitaler Kommunikationsverfahren ausnutzen zu können, zeigt die Erfindung einen Weg.

In diesem Zusammenhang ist es bereits (aus NTF 73, 1980, S. 36 ... 40) bekannt, dem Analog-Fernsprech-Kanal einer an eine Zweidraht-Anschlußleitung angeschlossenen Fernmelde-Teilnehmerstelle einen oberhalb des Fernsprechbandes liegenden 96 kbit/s-Digital-Kommunikations-Kanal zu überlagern, indem die Zweidraht-Anschlußleitung durch eine Frequenzweiche abgeschlossen wird, an deren Tiefpaßzweig das übliche Analog-Fernsprechgerät angeschlossen ist und an deren Hochpaßzweig über eine adaptive Gabelschaltung in Form einer mit einem Echokompensator verbundenen Brückenschaltung eine Digitalsignal-Sende-/Empfangs-Schaltung angeschlossen ist. Eine solche Fernmelde-Teilnehmerstelle erscheint insofern als relativ aufwendig, als neben einer als Frequenzmultiplexer/-demultiplexer wirkenden Frequenzweiche sowohl im Tiefpaßzweig als auch im Hochpaßzweig jeweils eine durch eine Brückenschaltung zu realisierende Gabelschaltung vorgesehen sein muß, wobei die im Hochpaßzweig liegende, an sich zu schmalbandige Brückenschaltung durch einen Echokompensator ergänzt sein muß.

Aus IBM Technical Disclosure Bulletin 19 (1976) 7, 2571/2572, ist ein Übertragungssystem mit einer Analog- und Digital-Fernmelde-Teilnehmerstelle und einer beiderseits jeweils mit einer Gabelschaltung abgeschlossenen Zweidraht-Teilnehmeranschlußleitung bekannt, bei dem in einem das Fernsprechband überdeckenden 4-kHz-Analog-Kommunikations-Kanal bidirektionale Analog-Fernsprech- oder -Datenkommunikation in Frequenzgleichlage und oberhalb des Sprachkanals in zwei 4-kHz-Signalisierungskanälen bidirektionale Signalisierung in Frequenzgetrenntlage vorgesehen ist. Ein solches Übertragungssystem ergänzt lediglich die herkömmliche Fernsprech-Analog-Kommunikation durch eine Out-of-Band-Signalisierungsmöglichkeit, ermöglicht aber keine Digital-Fernsprechkommunikation.

Der Erfindung liegt demgegenüber die Aufgabe zugrunde, eine relativ wenig aufwendige Fernmelde-Teilnehmerstelle für Digital-Fernsprechkommunikation in einem oberhalb des Fernsprechbandes liegenden Digital-Kommunikations-Kanal anzugeben, wobei daneben auch Analog-Kommunikation im Fernsprechband ermöglicht ist.

Die Erfindung betrifft eine an eine Zweidraht-Anschlußleitung anschließbare Analog-/Digital-Fernmelde-Teilnehmerstelle mit einem Frequenzmultiplexer bzw. -demultiplexer zur Bündelung bzw. Auffächerung eines das Fernsprechband überdeckenden Analog-Kommunikations-Kanals und eines oberhalb des Fernsprechbandes liegenden Digital-Kommunikations-Kanals und mit einer einen Zweidrahtleitungszweig in einen vierdrähtigen Sende-/Empfangs-Leitungszweig, insbesondere Sprechstrom-/Hörstrom-Leitungszweig, überführenden Gabelschaltung, wobei der die Zweidraht-Anschlußleitung abschließenden Gabelschaltung im Sende-Leitungszweig ein zumindest den das Fernsprechband überdeckenden Analog-Kommunikations-Kanal und den oberhalb des Fernsprechbandes liegenden Digital-Kommunikations-Kanal bündelnder Frequenzmultiplexer vorgeschaltet und im Empfangs-Leitungszweig ein zumindest den das Fernsprechband überdeckenden Analog-Kommunikations-Kanal und den oberhalb des Fernsprechbandes liegenden Digital-Kommunikations-Kanal auffächernder Frequenzdemultiplexer nachgeschaltet ist. Die Fernmelde-Teilnehmerstelle ist erfindungsgemäß dadurch gekennzeichnet, daß der Sprechstrom-Leitungszweig der Fernmelde-Teilnehmerstelle über einen Coder und eine Digitalsignal-Sendeschaltung zum Aussenden von Sendesignalimpulsen mit einem oberhalb des Fernsprechbandes liegenden Frequenzspektrum mit dem Digitalkommunikationskanal-Eingang des Frequenzmultiplexers und der Digitalkommunikationskanal-Ausgang des Frequenzdemultiplexers über eine Digitalsignal-Empfangsschaltung zum Empfang von Empfangssignalimpulsen mit einem ebenfalls oberhalb des Fernsprechbandes liegenden Frequenzspektrum und einen Decoder mit dem Hörstrom-Leitungszweig der Fernmelde-Teilnehmerstelle direkt oder jeweils über durch manuelle Signalgabe und/oder nach Maßgabe eines Empfanges von Digitalsignalen umschaltbare Umschalteeinrichtungen verbunden ist, wobei bei der genannten direkten Verbindung mit dem Analogkommunikationskanal-Eingang des Frequenzmultiplexers der Sendezweig, insbesondere Sprechstrom-Leitungszweig, und mit dem Analogkommunikationskanal-Ausgang des Frequenzdemultiplexers der Empfangszweig, insbesondere Hörstrom-Leitungszweig, einer mit der Fernmelde-Teilnehmerstelle zu einem Zweieranschluß zusammengefaßten weiteren Fernmelde-Teilnehmerstelle verbunden ist bzw. bei über die genannten Umschalteeinrichtungen verlaufender Verbindung mit dem Analogkommunikationkanal-Eingang des Frequenzmultiplexers der Ausgang und mit dem Analogkommunikationskanal-Ausgang des Frequenzdemultiplexers der Eingang eines einem Datenendgerät zugehörigen Fernsprechkanalmodems über entsprechende weitere Umschalteeinrichtungen verbunden ist und über die genannten Umschalteeinrichtungen alternativ mit dem Analogkommunikationskanal-Eingang des Frequenzmultiplexers der Sprechstrom-Leitungszweig und mit dem Analogkommunikationskanal-Ausgang des Frequenzdemultiplexers der Hörstrom-Leitungszweig der Fernmelde-Teilnehmerstelle verbindbar ist, während mit dem Digitalkommunikationskanal-Eingang des Frequenzmultiplexers eine einem Digitalkommunikations-Endgerät zugeordnete Digitalsignal-Sendeschaltung zum Aussenden von Sendesignalimpulsen mit einem im wesentlichen oberhalb des Fernsprechbandes liegenden Frequenzspektrum und mit dem Digitalkommunikationskanal-Ausgang des Frequenzdemultiplexers eine einem Digitalkommunikations-Endgerät zugeordnete Digitalsignal-Empfangsschaltung zum Empfang von Empfangssignalimpulsen mit einem ebenfalls oberhalb des Fernsprechbandes liegenden Frequenzspektrums verbindbar ist. In weiterer Ausgestaltung der Erfindung kann der Frequenzmultiplexer bzw. -demultiplexer zusammen mit dem das Fernsprechband überdeckenden (beispielsweise etwa von 0,3 kHz bis 3,4 kHz reichenden) Analog-Kommunikations-Kanal und dem oberhalb des Fernsprechbandes liegenden (beispielsweise etwa von 4,5 bis 80 kHz reichenden) Digital-Kommunikationskanal einen unterhalb des Analog-Kommunikations-Kanals liegenden (beispielsweise etwa bis 0,1 kHz reichenden) Digitalsignalkanal und/oder einen oberhalb des Digital-Kommunikations-Kanals liegenden (beispielsweise etwa von 0,1 bis 1 MHz reichenden) Analogkanal oder auch Digitalkanal bündeln bzw. auffächern.

Die Erfindung macht sich dabei besonders den Umstand zunutze, daß aufgrund neuerer fernmeldetechnischer Entwicklungen als für die Anwendung im Rahmen der Erfindung besonders geeignet eine relativ einfache und zugleich sehr breitbandige übertragerfreie Gabelschaltung zur Verfügung steht, in der parallel zur Serienschaltung einer vom Sendeleitungszweig gesteuerten Stromquelle und eines Widerstandes die aus einem zweiten Widerstand und einer Restimpedanz gebildete Zweidrahtleitungs-Abschlußimpedanz geschaltet ist und der durch die beiden Widerstände gebildeten Serienschaltung die Serienschaltung zweier weiterer Resistanzen parallelgeschaltet ist, wobei der Empfangs-Leitungszweig durch die zwischen dem Verbindungspunkt der beiden Resistanzen und dem verbindungspunkt der beiden Widerstände auftretende Spannung gesteuert wird ; es wird damit eine sehr breitbandige, bis hin zum Megahertzbereich wirksame Entkopplung der Übertragungssignale der beiden Übertragungsrichtungen erreicht.

Die Erfindung bringt den Vorteil mit sich, mit relativ geringem schaltungstechnischen Aufwand in beiden Übertragungsrichtungen jeweils Analog-Kommunikation im (3-kHz-)Fernsprech-Kanal und Digital-Kommunikation in einem darüberliegenden Digital-Kommunikations-Kanal, beispielsweise einem 64- oder 80-kbit/s-Kanal, auch schon im Rahmen eines herkömmlichen Analog-Fernmeldenetzes zu ermöglichen, indem sie gleichzeitig Digital-Fernsprechen beispielsweise in einem 64-kbit/s-Kommunikationskanal und (langsame) Datenübertragung im Analog-Fernsprechkanal bzw. gleichzeitig mit einem normalen Analog-Fernsprech-Betrieb eine Kommunikation zwischen (schnellen) Digitalkommunikations-Endgeräten beispielsweise mit einem Datenfluß von 64 oder 80 kbit/s vorsieht und des weiteren eine moderne Realisierung eines Zweieranschlusses ermöglicht, die zugleich dem einen Zweieranschluß-Teilnehmer Digital-Kommunikationsmöglichkeiten auch schon im Rahmen eines herkömmlichen Analog-Fernmeldenetzes erschließt ; die Erfindung bringt darüberhinaus den weiteren Vorteil mit sich, auch einen Weg zu einer Digitalkommunikation in einem unterhalb des Fernsprech-Bandes liegenden Teilnehmersignalkanal und/oder zu einer Analog-Kommunikation, insbesondere Video-Kommunikation, in einem oberhalb des Digital-Kommunikations-Kanals liegenden Analogkanal zu eröffnen. Von Vorteil ist in diesem Zusammenhang insbesondere auch, daß aufgrund zweckentsprechender Wahl von Leitungscode und Modulationsart, so daß . sich Digitalsignal-Basisband und Analogsignal-Basisband zumindest nicht merklich überschneiden, der Multiplexer zu einer einfachen Kombinationsschaltung reduziert sein kann.

In weiterer Ausgestaltung der Erfindung kann ferner eine gescrambelte Pseudoternär-Halbschritt-Signalimpulse (AMI-Signaliumpulse) aussendende Digitalsignal-Sendeschaltung und/oder eine solche — keine wesentlichen Spektrumsanteile im Sprachfrequenzband aufweisenden — Signalimpulse empfangende Digitalsignal-Empfangsschaltung vorsehn sein ; es kann auch eine Digitalsignal-Sendeschaltung zum Aussenden von Sendesignalimpulsen zu bestimmten Zeitpunkten bzw. mit einem vorgegebenen Schwerpunkt ihrer Frequenzspektrums und eine Digitalsignal-Empfangsschaltung zum Empfangen von Empfangssignalimpulsen zu anderen Zeitpunkten bzw. mit einem anderen Schwerpunkt ihres Frequenzspektrums vorgesehen sein, was eine weitere Erhöhung der Entkopplung mit sich bringt.

Die Fernmelde-Teilnehmerstelle kann in weiterer Ausgestaltung der Erfindung über die Zweidraht-Anschlußleitung an einen Eingang/Ausgang einer Zweidraht-Vermittlungsstelle angeschlossen sein und sich damit die Breitbandigkeit der Koppelpunktschalter heuteüblicher Zweidraht-Vermittlungen und ebenso der heute installierten Zweidraht-Ortsverbindungsleitungen zunutze machen, so daß bei entsprechender Breitbandigkeit auch der Teilnehmeranschlußschaltungen, wie sie bei sog. Drosselspeisung gegeben ist, auch in einem herkömmlichen Analog-Fernmeldenetz unter Weiterbenutzung der darin üblichen Signalisierungs- und Verbindungsauf- und -abbauverfahren und der übrigen vermittlungstechnischen Leistungsmerkmale, d. h. im Rahmen bereits vorhandener Zweidraht-Vermittlungsstellen und -Nebenstellenanlagen, nicht nur generell die Vorteile digitaler Kommunikationsverfahren, wie z. B. weitgehender Dämpfungsunabhängigkeit, konstanter und ggf. verbesserter Sprachqualität und einfacher Realisierbarkeit verschiedener Kommunikationsformen in einer bestehenden Verbindung (Mischkommunikation), ausgenutzt werden können, sondern dabei beispielsweise neben einem Fernsprech-Analog-Kanal auch ein darunterliegender Teilnehmersignalisierungskanal und ein darüberliegender schneller Datenkanal bereitgestellt werden können. Von Vorteil ist dabei die Vermeidung von Kompatibilitätsproblemen, indem von einer in der angegebenen Weise ausgebildeten und angeschlossenen Fernmelde-Teilnehmerstelle einerseits Analog-Verbindungen sowohl zu reinen Analog-Fernmeldestellen als auch zu in der vorstehend angegebenen Weise ausgerüsteten Fernmelde-Teilnehmerstellen möglich sind und andererseits Digital-Verbindungen sowohl zu in der angegebenen Weise ausgerüsteten Fernmelde-Teilnehmerstellen als auch zu reinen Digital-Teilnehmerstellen, womit die Möglichkeit gegeben ist, ggf. auch nur einzelne Fernmelde-Teilnehmerstellen einer herkömmlichen Ortsvermittlungsstelle oder Nebenstellenanlage gemäß der Erfindung auszubilden und anzuschließen.

Anhand der Zeichnungen sei die Erfindung noch näher erläutert.

Dabei zeigt

Figur 1 im Rahmen eines Fernmeldesystems ein Ausführungsbeispiel einer Analog-/Digital-Fernmelde-Teilnehmerstelle gemäß der Erfindung ;

Figur 2 zeigt ein Prinzipschaltbild und

Figur 3 zeigt schaltungstechnische Einzelheiten einer für die Analog-/Digital-Fernmelde-Teilnehmerstelle gemäß der Erfindung besonders geeigneten Breitbandgabelschaltung.

Figuren 4 und 5 zeigen wiederum im Rahmen eines Fernmeldesystems ein Ausführungsbeispiel einer Analog-/Digital-Fernmelde-Teilnehmerstelle gemäß der Erfindung ; und

Figur 6 zeigt wiederum ein Prinzipschaltbild einer für die Analog-/Digital-Fernmelde-Teilnehmerstelle gemäß der Erfindung besonders geeigneten Breitbandgabelschaltung.

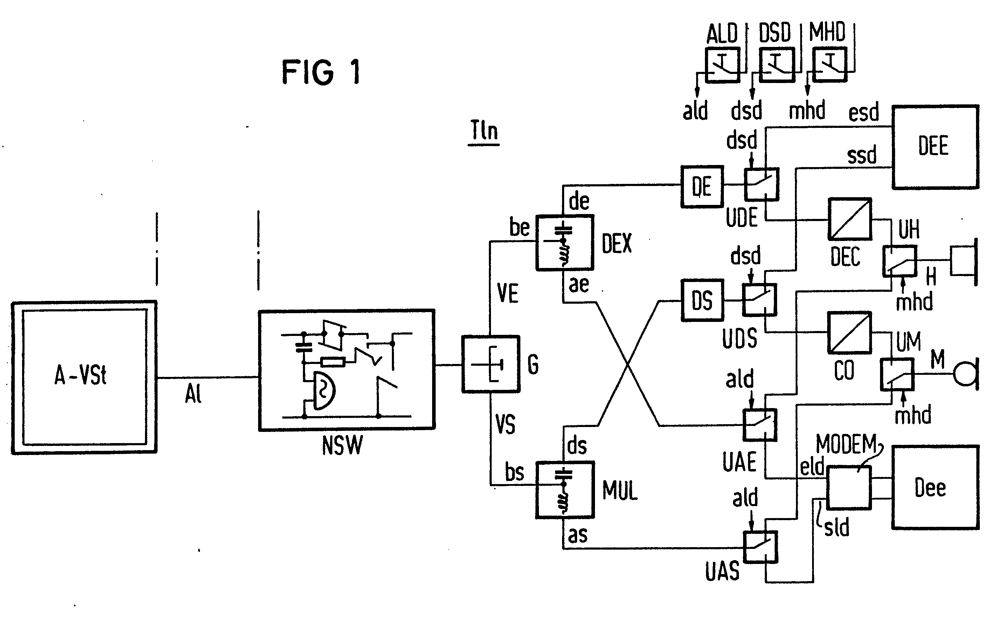

Die Zeichnung Fig. 1 zeigt schematisch in einem zum Verständnis der Erfindung erforderlichen Umfange ein Fernmeldesystem mit einer Analog-/Digital-Fernmelde-Teilnehmerstelle gemäß der Erfindung. Dieses Fernmeldesystems weist eine (z. B. durch eine Nebenstellen-Vermittlungsanlage ESK 10-2 electronic oder EMS 300 gegebene) Zweidraht-Vermittlungsstelle A-VSt auf, an die über in Fig. 1 nicht im einzelnen dargestellte Zweidraht-Anschlußleitungen Fernmelde-Teilnehmerstellen jeweils mit einer mit der Zweidraht-Anschlußleitung verbundenen Signalisierungsschaltung und einer einen Zweidrahtleitungszweig in einen vierdrähtigen Sende-/Empfangs-Leitungszweig, insbesondere Sprechstrom-/Hörstrom-Leitungszweig, überführenden Gabelschaltung angeschlossen sein können, wobei solche Fernmelde-Teilnehmerstellen zur gleichzeitigen Analog-Kommunikation und Digital-Kommunikation mit einem Frequenzmultiplexer bzw. -demultiplexer zur Bündelung bzw. Auffächerung eines das Fernsprechband überdeckenden Analog-Kommunikations-Kanals und eines oberhalb des Fernsprechbandes liegenden Digital-Kommunikations-Kanals versehen sein können. Über eine Zweidraht-Anschlußleitung AI ist an die Zweidraht-Vermittlungsstelle A-VSt eine Analog-/Digital-Fernmelde-Teilnehmerstelle Tln angeschlossen, die eine die Zweidraht-Anschlußleitung AI abschließende Breitbandgabelschaltung G sowie eine mit der Zweidraht-Anschlußleitung AI verbundene Signalisierungsschaltung NSW aufweist ; in Fig. 1 ist dazu angedeutet, daß die Signalisierungsschaltung durch eine übliche, in die Zweidraht-Anschlußleitung AI eingefügte bzw. in Kettenschaltung mit ihr verbundene Nummernschalter-/Wecker-Schaltung NSW gebildet sein kann. (Alternativ dazu kann die Fernmelde-Teilnehmerstelle aber auch mit Tastenwahl ausgerüstet sein, ohne daß dies in Fig. 1 dargestellt ist ; die Fernmeldeteilnehmerstelle kann auch ein Display zur Sichtbarmachung von Informationen aufweisen, was ebenfalls in Fig. 1 nicht näher dargestellt ist).

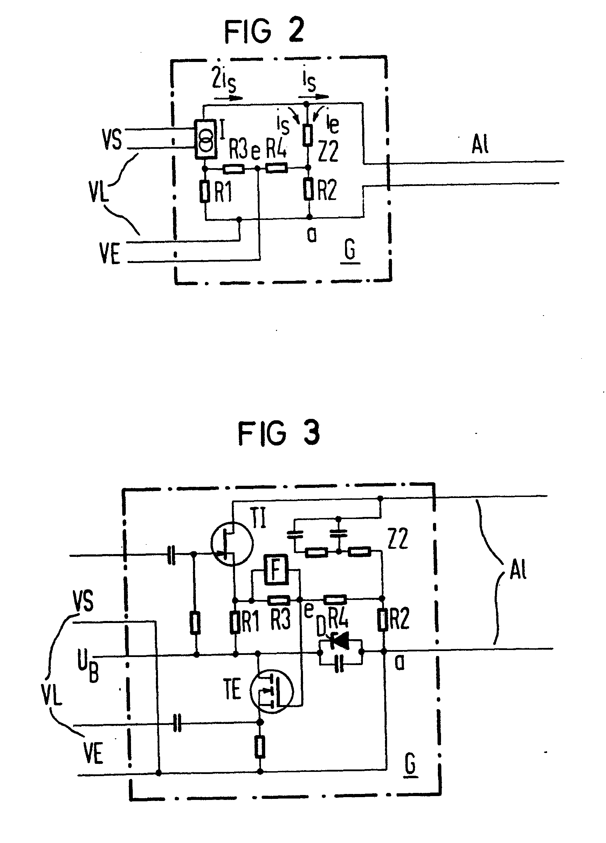

Bezüglich der Breitbandgabelschaltung G sei an dieser Stelle zunächst ein Blick auf die Zeichnungen Fig. 2 und Fig. 3 geworfen, die ein Prinzipschaltbild und schaltungstechnische Einzelheiten einer solchen Breitbandgabelschaltung G zeigen.

Die in Fig. 2 im Prinzipschaltbild dargestellte, mit einer den Wellenwiderstand der Zweidrahtleitung AI zumindest angenähert nachbildenden Zweidrahtleitungs-Abschlußimpedanz Z2, R2 versehene Gabelschaltung G zur Verbindung der Zweidrahtleitung AI mit einer den Sendezweig VS und den Empfangszweig VE aufweisenden Vierdrahtleitung VL bei gleichzeitiger Entkopplung der beiden Vierdrahtleitungszweige VS, VE voneinander enthält zunächst die Reihenschaltung einer Signalstromquelle I, zu deren Steuereingang der Sendezweig VS der Vierdrahtleitung VL führt, und eines ersten ohmschen Widerstandes R1 ; dieser Reihenschaltung ist die durch die Reihenschaltung eines zweiten ohmschen Widerstandes R2, dessen Widerstandswert zumindest angenähert doppelt so groß wie derjenigen des ersten ohmschen Widerstandes R1 sein mag, und einer weiteren Impedanz Z2 gebildete Zweidrahtleitungs-Abschlußimpedanz parallelgeschaltet. Die beiden einen Klemmen der beiden ohmschen Widerstände R1, R2 sind untereinander und mit der einen Zweidrahtleitungsader a zumindest wechselstrommäßig direkt verbunden, während die beiden anderen Klemmen der beiden ohmschen Widerstände R1, R2 über die Reihenschaltung zweier Resistanzen R3, R4 miteinander verbunden sind, wobei diese beiden Resistanzen von gleicher Größe und zugleich groß gegenüber dem ersten Widerstand R1 und dem zweiten Widerstand R2 sein mögen. Zwischen dem Verbindungspunkt e der beiden Resistanzen R3, R4 und dem Verbindungspunkt a der beiden Widerstände R1, R2 ist der Empfangszweig VE der Vierdrahtleitung VL angeschlossen.

In der Schaltungsanordnung nach Fig. 2 teilt sich der von der vom Sendezweig VS der Vierdrahtleitung VL her gesteuerten Stromquelle I gelieferte Sendesignalstrom $2 i_s$ auf die Zweidrahtleitung AI und die Zweidrahtleitungs-Abschlußimpedanz Z2, R2 zu zumindest angenähert gleichen Teilen $i_s$ auf ; zugleich fließt durch die Zweidrahtleitungs-Abschlußimpedanz Z2, R2 der über die Zweidrahtleitung AI von der — in Fig. 2 nicht näher dargestellten, im Prinzip ebenfalls mit einer Signalstromquelle versehenen — Gegenstelle her gelieferte Empfangssignalstrom $i_e$. Am Widerstand R2 der Zweidrahtleitungs-Abschlußimpedanz Z2 + R2 tritt daher eine Spannung auf, die sich aus einem empfangssignalstromproportionalen Anteil $i_e \cdot R2$ und einem sendesignalstromproportionalen Anteil $i_s \cdot R2$ zusammensetzt. Auf der anderen Seite wird der in Serie zur Signalstromquelle I liegende ohmsche Widerstand R1 nur von dem Sendesignalstrom $2 \cdot i_s$ durchflossen, so daß hier allein eine sendestromproportionale Spannung $2 \cdot i_s \cdot R1$ auftritt. Der zwischen dem Verbindungspunkt a der beiden Widerstände R1, R2 und dem Verbindungspunkt e der beiden Resistanzen R3, R4 angeschlossene Empfangszweig VE der Vierdrahtleitung VL wird mit einem der zwischen den beiden Verbindungspunkten e und a auftretenden, dem Empfangssignalstrom proportionalen Spannung entsprechenden Empfangssignal beaufschlagt. Dabei ist die gegenseitige Kompensation der an den beiden ohmschen Widerständen R1 und R2 jeweils auftretenden sendesignalstromproportionalen Spannungen nicht daran gebunden, daß, wie zuvor zunächst angenommen, der Widerstandswert des zweiten ohmschen Widerstandes R2 gerade doppelt so groß wie derjenige des ersten ohmschen Widerstandes R1 ist und daß der Widerstandswert der Resistanz R3 gerade gleich demjenigen der Resistanz R4 ist ; es genügt vielmehr, daß zumindest angenähert $R2 \cdot R3 = 2 \cdot R1 \cdot R4$ ist, wobei die Widerstandswerte der Resistanzen R3 und R4 groß gegenüber den Widerstandswerten der Widerstände R1 und R2 sein sollten, so daß ein Einfluß des Empfangssignalstroms $i_e$ über die Resistanzen R3, R4 auf die Sendesignalstromquelle I zu vernachlässigen ist.

Die Parallelschaltung von Zweidrahtleitungs-Abschlußimpedanz Z2, R2 und Stromquellenzweig I, R1 kann bei gleichstromundurchlässiger Zweidrahtleitungs-Abschlußimpedanz auch als Speiseweiche für einen über die Zweidrahtleitung AI zugeführten Speisestrom ausgenutzt werden, so daß die Signalstromquelle I von dem über die Zweidrahtleitung AI zugeführten Speisestrom durchflossen wird. Dabei kann die Signalstromquelle I durch einen an seiner Steuerelektrode vom Sendezweig VS der Vierdrahtleitung VS her gesteuerten, speisestromdurchflossenen Transistor TI gebildet sein, wie dies die Zeichnung Fig. 3 verdeutlicht. Als Signalstromquelle ist in der Breitbandgabelschaltung G nach Fig. 3 ein tunlichst temperaturstabiler, spannungsfester Feldeffekttransistor TI, im Beispiel ein N-Kanal-Sperrschicht-Feldeffekttransistor vorzugsweise mit hoher Steilheit, vorgesehen, dessen Source-Widerstand den genannten ersten ohmschen Widerstand R1 mit einem Widerstandswert von beispielsweise 50 Ω bildet. Über ein mit einem Kondensator von beispielsweise 10 nF und einem Widerstand von z. B. 1 MΩ gebildetes Koppelglied kann der Feldeffekttransistor TI vom Sendezweig VS her, beispielsweise von einer Mikrophon- oder Mikrofonverstärkerschaltung, gesteuert werden, so daß der Speisestrom entsprechend moduliert und damit ein entsprechender Sendesignalstrom erzeugt wird.

Die gemäß Fig. 3 gleichstromundurchlässige Zweidrahtleitungs-Abschlußimpedanz Z2, R2 besteht aus der Reihenschaltung des genannten zweiten ohmschen Widerstandes R2 von beispielsweise 100 Ω und der zur weiteren Nachbildung des Zweidrahtleitungs-Wellenwiderstandes jeweils nach Leitungstyp erforderlichen weiteren Impedanz Z2, die vorteilhaft durch eine RC-Schaltung, ggf. durch eine RC-Kettenbruchschaltung, gebildet sein kann, wie dies auch in Fig. 3 angedeutet ist. Zwischen dem Verbindungspunkt e der beiden Resistanzen R3, R4, die jeweils einen Widerstandswert von beispielsweise 100 kΩ aufweisen mögen, und dem Schaltungspunkt a, an dem die beiden ohmschen Widerstände R1 und R2 wechselspannungsmäßig direkt miteinander verbunden sind, liegt in der Breitbandgabelschaltung G gemäß Fig. 3 die Steuerstrecke eines Transistors TE, im Beispiel eines als einfacher Sourcefolger arbeitenden Verarmungs-IG-Feldeffekttransistors mit N-Kanal, an dessen Source-Widerstand über einen Kondensator das Empfangssignal für den Empfangszweig VE der Vierdrahtleitung VL abgenommen wird. Alternativ zum Transistor TE kann auch, ohne daß dies in der Zeichnung noch dargestellt ist, ein gegengekoppelter Operationsverstärker vorgesehen sein, der mit seinem invertierenden Eingang am Empfangssignalschaltungspunkt e und mit seinem anderen Eingang am Schaltungspunkt a liegt und dessen Ausgang zu dem Empfangszweig VE der Vierdrahtleitung VL führt ; dabei sind dann sonst etwa noch verbleibende Rückwirkungen des Empfangssignals auf den Signalstromquellentransistor TI vermieden.

Wie dies auch in Fig. 3 angedeutet ist, kann parallel zur Resistanz R3 ein adaptives Transversalfilter F vorgesehen sein, das dem Empfangssignalschaltungspunkt e zur weiteren Erhöhung der Entkopplung zwischen Sendezweig VS und Empfangszweig VE der Vierdrahtleitung VL ein Echokompensationssignal zuführt. Nachdem es (z. B. aus FREQUENZ 28 (1974) 5, 118 ... 122 und 155 ... 161) prinzipiell bekannt ist, im Empfangszweig einer Gabelschaltung auftretende, sendesignalbedingte Störsignale durch Addition bzw. Subtraktion von Kompensationssignalen zu eliminieren, braucht hier auf eine solche Echokompensation nicht näher eingegangen zu werden.

Zwischen den wechselstrommäßig miteinander verbundenen Klemmen des ersten Widerstandes R1 und des zweiten Widerstandes R2 ist in den Speisestromkreis ein von dem über die Zweidrahtleitung zugeführten Speisestrom durchflossenes Schaltungsglied D eingefügt, an welchem eine örtliche Betriebsspannung $U_B$ (für Sende- und Empfangsschaltungen der Vierdrahtleitung bzw. für den Vierdrahtzweig insgesamt und für die Gabelschaltung selbst) abgreifbar ist. Dieses Schaltungsglied ist in der Schaltungsanordnung nach Fig. 3 durch eine Zenerdiode gebildet ; in Abweichung von der Darstellung in Fig. 3 kann die Zenerdiode aber auch durch eine Schaltung ersetzt sein, die nur dann Strom aufnimmt, wenn die Betriebsspannung $U_B$ einen Betriebsspannungssollwert erreicht hat.

Um nun wieder auf Fig. 1 zurückzukommen, so ist der Breitbandgabelschaltung G im Sende-Leitungszweig VS ein zumindest einen das Fernsprechband überdeckenden Analog-Kommunikations-Kanal und einen oberhalb des Fernsprechbandes liegenden Digital-Kommunikations-Kanal bündelnder Frequenzmultiplexer MUL vorgeschaltet und im Empfangs-Leitungszweig VE ein zumindest einen das Fernsprechband überdeckenden Analog-Kommunikationskanal und einen oberhalb des Fernsprechbandes liegenden Digital-Kommunikations-Kanal auffächernder Frequenzdemultiplexer DEX nachgeschaltet. In Fig. 1 sind der Frequenzmultiplexer MUL und der Frequenzdemultiplexer DEX jeweils als Tiefpaß-/Hochpaß-Frequenzweiche dargestellt, wobei der Tiefpaß-Eingang as bzw. -Ausgang ae des Frequenzmultiplexers MUL bzw. -Demultiplexers DEX den Analogkommunikationskanal-Eingang bzw. -Ausgang bildet und der Hochpaß-Eingang ds bzw. -Ausgang de den Digitalkommunikationskanal-Eingang bzw. -Ausgang. Über Umschalteeinrichtungen UAS, UM ist mit dem Analogkommunikationskanal-Eingang as des Frequenzmultiplexers MUL der Sprechstrom-Leitungszweig M der Fernmelde-Teilnehmerstelle Tln verbunden, und über Umschalteinrichtungen UAE, UH ist mit dem Analogkommunikationskanal-Ausgang ae des Demultiplexers DEX der Hörstrom-Leitungszweig H der Fernmelde-Teilnehmerstelle Tln verbunden. Der Ausgang bs des Frequenzmultiplexers MUL führt zum Sende-Leitungszweig VS der die

Zweidraht-Anschlußleitung Al abschließenden, die Trennung der Übertragungssignale der beiden Übertragungsrichtungen bewirkenden Breitbandgabelschaltung G, deren Empfangs-Leitungszweig VE zu dem Eingang be des Frequenzdemultiplexers DEX führt.

Damit kann die Fernmelde-Teilnehmerstelle Tln zunächst einmal (bei dem in Fig. 1 dargestellten Schaltzustand der genannten Umschalteinrichtungen UM, UAS ; UAE, UH) unter Abgabe von Wahlimpulsen bzw. Empfang von Rufstromsignalen beim Verbindungsaufbau, Übertragung von Analog-Sprachsignalen in Basisbandlage während des Bestehens einer Fernsprechverbindung sowie Schleifenstromunterbrechung beim Auslösen der Verbindung in der üblichen Weise am Fernsprechverkehr teilnehmen (Analog-Fernsprechbetrieb).

Mit dem Digitalkommunikationskanal-Eingang ds des Frequenzmultiplexers MUL ist eine Digitalsignal-Sendeschaltung DS zum Aussenden von Sendesignalimpulsen mit einem im wesentlichen oberhalb des Fernsprechbandes, d. h. deutlich oberhalb von etwa 4,8 kHz, liegenden Frequenzspektrum verbunden, zu der über eine Umschalteinrichtung UDS der Ausgang ssd eines Digitalkommunikations-Endgerätes DEE führt, bei dem es sich beispielsweise um ein 64-kbit/s-Datenendgerät handeln kann ; mit dem Digitalkommunikationskanal-Ausgang de des Frequenzdemultiplexers DEX ist eine Digitalsignal-Empfangsschaltung DE zum Empfang von Empfangssignalimpulsen mit einem ebenfalls oberhalb des Fernsprechbandes liegenden Frequenzspektrum verbunden, die ihrerseits über eine Umschalteinrichtung UDE mit dem Eingang esd des genannten Digitalkommunikations-Endgerätes DEE verbunden ist.

Damit kann (bei dem in Fig. 1 dargestellten Schaltzustand der Umschalteinrichtungen UDS, UDE) im Rahmen einer Fernmeldeverbindung mit der in Fig. 1 dargestellten Analog-/Digital-Fernmelde-Teilnehmerstelle Tln neben einer im üblichen Fernsprech-Kanal (ca. 0,3 ... 3,4 kHz) stattfindenden Analog-Fernsprechkommunikation in einem oberhalb des Fernsprechbandes liegenden Digital-Kommunikations-Kanal, beispielsweise einem 64-kbit/s-Einheitskanal, auch eine schnelle Daten-Kommunikation (Digital-Datenbetrieb) stattfinden.

Als keine wesentlichen Spektrumsanteile im Sprachfrequenzband aufweisende Digitalsignalimpulse kann dabei die Digitalsignal-Sendeschaltung beispielsweise Pseudoternär-Halbschritt-Signalimpulse, sogenannte half-bauded-AMI-(alternate-mark-inversion-) Signalimpulse abgeben, wozu sie, wie dies an anderer Stelle (DE-AS 29 16 576) angegeben wird, einen Momentanwerte der Sendesignalimpulse codiert speichernden und nach Maßgabe ihr zugeführter Digitalsignale angesteuerten Festwertspeicher aufweisen kann, der die entsprechenden Momentanwerte in ihrer codierten Darstellung einem Decoder zuführt, welcher daraus die entsprechenden Sendesignalimpulse bildet. Zum Empfang entsprechender Empfangssignalimpulse kann die Digitalsignal-Empfangsschaltung DE einen Regenerator enthalten, wie er prinzipiell (beispielsweise aus der Siemens-Druckschrift « PCM — Die Pulscode-Modulation und ihrer Anwendung im Fernmeldewesen », Seite 15, Bild 21) bekannt ist und in dem mit Hilfe eines Taktextraktors aus den Empfangssignalimpulsen der Empfangsbittakt abgeleitet wird, aufgrund dessen die Entscheidungszeitpunkte definiert werden, in denen in der Digitalsignal-Empfangsschaltung DE jeweils die Amplitudenentscheidung über den jeweiligen Zustandswert des betreffenden Bits getroffen wird ; des weiteren kann die Digitalsignal-Empfangsschaltung DE einen im Beispiel mit einer Gleichrichterschaltung zu realisierenden Empfangssignalwandler enthalten, der die regenerierten Signale in entsprechende ΔM- bzw. PCM-Signale umformt.

Es ist auch möglich, eine Digitalsignal-Sendeschaltung DS zum Aussendenvon Sendesignalimpulsen zu bestimmten Zeitpunkten bzw. mit einem vorgegebenen Schwerpunkt ihres Frequenzspektrums und eine Digitalsignal-Empfangsschaltung DE zum Empfangen von Empfangssignalimpulsen zu anderen Zeitpunkten bzw. mit einem anderen Schwerpunkt ihres Frequenzspektrums vorzusehen ; der Sendebittakt kann, wie dies an anderer Stelle (DE-AS 29 21 019) vorgeschlagen wird, vom Empfangsbittakt abgeleitet und diesem gegenüber um eine halbe Bitzeitspanne phasenverschoben sein. Weitere Einzelheiten bezüglich einer in der Analog-/Digital-Fernmelde-Teilnehmerstelle Tln gemäß Fig. 1 enthaltenen Digitalsignal-Sendeschaltung DS und -Empfangsschaltung DE brauchen hier jedoch nicht erläutert zu werden, da dies zum Verständnis der Erfindung nicht erforderlich ist.

Nachdem aufgrund zweckentsprechender Wahl des im Digital-Kommunikations-Kanal verwendeten Leitungscodes sich das Digitalsignal-Basisband und das Analogsignal-Basisband zumindest nicht merklich überschneiden, kann übrigens in Abweichung von der Darstellung in Fig. 1 der Multiplexer MUL vorteilhafterweise zu einer einfachen Zusammenführungsschaltung reduziert sein, während der Demultiplexer DEX entsprechend der Darstellung in Fig. 1 durch eine Hochpaß-/Tiefpaß-Frequenzweiche gebildet ist.

Werden die Umschalteinrichtungen UAS, UAE von dem in Fig. 1 dargestellten Schaltzustand in den entgegengesetzten Schaltzustand umgeschaltet, so ist in der Analog-/Digital-Fernmelde-Teilnehmerstelle Tln gemäß Fig. 1 mit dem Analogkommunikations-Eingang as des Frequenzmultiplexers MUL der Ausgang sld und mit dem Analogkommunikationskanal-Ausgang ae des Frequenzdemultiplexers DEX der Eingang eld eines einem (langsamen) Datenendgerät Dee zugehörigen Fernsprechkanalmodems MODEM, beispielsweise des in einem Hell-Fernkopierer HF 1 048 enthaltenen Fernsprechkanalmodems, verbunden.

Damit kann dann im Rahmen einer bestehenden Fernmeldeverbindung mit der in Fig. 1 dargestellten Analog-/Digital-Fernmelde-Teilnehmerstelle Tln neben einer in dem oberhalb des Fernsprechbandes liegenden Digital-Kommunikationskanal, beispielsweise 64-kbit/s-Einheitskanal, stattfindenden schnellen Daten-Kommunikation (Digital-Datenbetrieb) im üblichen Fernsprechband (ca. 0,3 ... 3,4 kHz) eine langsame Daten-Kommunikation (Analog-Datenbetrieb) stattfinden.

Werden (auch) die Umschalteinrichtungen UM, UDS ; UDE, UH von dem in Fig. 1 dargestellten Schaltzustand in den entgegengesetzten Schaltzustand umgeschaltet, so ist sendeseitig der Sprechstrom-Leitungszweig M der Fernmelde-Teilnehmerstelle Tln gemäß Fig. 1 über die Umschalteinrichtung UM mit einem beispielsweise durch einen Delta- oder Pulscode-Modulator gegebenen Sprachsignal-Coder CO verbunden, der seinerseits über die Umschalteinrichtung UDS mit der zum Digitalkommunikationskanal-Eingang ds des Frequenzmultiplexers MUL führenden Digitalsignal-Sendeschaltung DS zum Aussenden von Sendesignalimpulsen mit einem oberhalb des Fernsprechbandes liegenden Frequenzspektrum verbunden ist ; empfangsseitig ist dann die an den Digitalkommunikationskanal-Ausgang de des Frequenzdemultiplexers DEX angeschlossene Digitalsignal-Empfangsschaltung DE zum Empfang von Empfangssignalimpulsen mit einem ebenfalls oberhalb des Fernsprechbandes liegenden Frequenzspektrum über die Umschalteinrichtung UDE mit einem Sprachsignal-Decoder DEC verbunden, der über die Umschalteinrichtung UH zum Hörstrom-Leitungszweig H der Fernmelde-Teilnehmerstelle Tln führt.

Damit kann dann im Rahmen einer Fernmeldeverbindung mit der in Fig. 1 dargestellten Analog/Digital-Fernmelde-Teilnehmerstelle Tln neben einer im üblichen Fernsprechband (ca. 0,3 ... 3,4 kHz) stattfindenden langsamen Daten-Kommunikation (Analog-Datenbetrieb) in dem oberhalb des Fernsprechbandes liegenden Digital-Kommunikations-Kanal, beispielsweise 64-kbit/s-Einheitskanal, eine Fernsprechkommunikation (Digital-Fernsprechbetrieb) stattfinden. Dabei kann übrigens die Fernsprechkommunikation auch nur in einem entsprechende ΔM-Signale führenden 32-kbit/s-Teilkanal des 64-kbit/s-Einheitskanals vonstatten gehen, während ein zweiter 32-kbit/s-Teilkanal für eine die Fernsprechkommunikation unterstützenden Kommunikationsart, z. B. Fernzeichnen, ausgenutzt werden kann, was mit Hilfe eines die Fernsprech-Digitalsignale und die Unterstützungskommunikations-Digitalsignale zusammenfassenden bzw. auffächernden Teilkanal-Multiplexers/-Demultiplexers bewirkt werden kann, hier jedoch nicht weiter verfolgt zu werden braucht, da dies zum Verständnis der Erfindung nicht erforderlich ist.

Das Umschalten der Umschalteinrichtungen UDS, UDE ; UAS, UAE ; UM, UH kann, wie dies auch in Fig. 1 angedeutet ist, durch manuelle Signalgabe mittels entsprechender Betriebsartenumschalter MHD, ALD, DSD ausgelöst werden. Daneben ist es auch möglich, die Umschalteeinrichtungen nach Maßgabe eines Empfanges von Digitalsignalen über die Zweidraht-Anschlußleitung AI automatisch umzuschalten, indem beispielsweise mit Hilfe einer mit der Digitalsignal-Empfangsschaltung DE verbundenen Überwachungsschaltung bei Empfang von Fernsprech-Digitalsignalimpulsen ein entsprechendes Umsteuersignal abgegeben wird, aufgrund dessen die in Frage kommenden Umschalteinrichtungen von « Analog-Fernsprechbetrieb » auf « Digital-Fernsprechbetrieb » umgeschaltet werden. Die Überwachungsschaltung wird dabei zweckmäßigerweise so ausgelegt, daß einerseits ein vorübergehendes Nichtauftreten von Fernsprech-Digitalsignalimpulsen, wie es im Verlauf einer ungestörten Gesprächsverbindung eintreten kann, überbrückt wird und andererseits bei längerem Ausfall von Fernsprech-Digitalsignalen aufgrund von Übertragungsfehlern — oder auch bei (die heute übliche Fernspeisung der Analog-Fernsprech-Teilnehmerstellen unberührt lassendem) Netzausfall — wieder auf Analog-Fernsprechbetrieb zurückgeschaltet wird — was im übrigen mit Hilfe der erwähnten Betriebsartenumschalter jederzeit auch von Hand geschehen kann. Dies braucht hier jedoch nicht weiter verfolgt zu werden, da dies zum Verständnis der Erfindung nicht erforderlich ist.

Soweit umgekehrt eine Betriebsartenumschaltung nicht erforderlich ist, weil beispielsweise neben einem Digital-Fernsprechbetrieb im Digital-Kommunikations-Kanal nur (langsamer) Analog-Datenbetrieb im Analog-Kommunikations-Kanal möglich sein soll oder weil beispielsweise neben einem Analog-Fernsprechbetrieb im Analog-Kommunikations-Kanal nur (schneller) Digital-Datenbetrieb im Digital-Kommunikations-Kanal durchführbar sein soll, können die dabei nicht benötigten Umschalteeinrichtungen auch entfallen bzw. durch eine feste Durchschaltung ersetzt sein, wobei, bezogen auf die Darstellung in Fig. 1, im ersten Beispiel auch das schnelle Datenendgerät DEE entfällt und im zweiten Beispiel das langsame Datenendgerät Dee mit zugehörigem Modem MODEM sowie Sprachsignal-Coder CO und Sprachsignal-Decoder DEC, während Digitalsignal-Sendeschaltung DS und Digitalsignal-Empfangsschaltung DE dann in das schnelle Datenendgerät DEE miteinbezogen sein können.

In dem in Fig. 1 skizzierten Ausführungsbeispiel einer Fernmelde-Teilnehmerstelle Tln gemäß der Erfindung werden gerade ein das Fernsprechband überdeckender Analog-Kommunikations-Kanal und ein oberhalb des Fernsprechbandes liegender Digital-Kommunikations-Kanal vom Frequenzmultiplexer MUL gebündelt bzw. vom Frequenzdemultiplexer DEX aufgefächert. Darüberhinausgehend ist es indessen auch möglich, daß der Frequenzmultiplexer bzw. -demultiplexer zusammen mit dem das Fernsprechband überdeckenden Analog-Kommunikationskanal und dem oberhalb des Fernsprechbandes liegenden Digital-Kommunikations-Kanal weitere Übertragungskanäle bündelt bzw. auffächert, wozu dann eine einfache Tiefpaß-/Hochpaß-Frequenzweiche, wie sie in Fig. 1 angedeutet ist, nicht mehr ausreicht, vielmehr stattdessen oder zusätzlich dazu entsprechende Bandpässe vorzusehen sind.

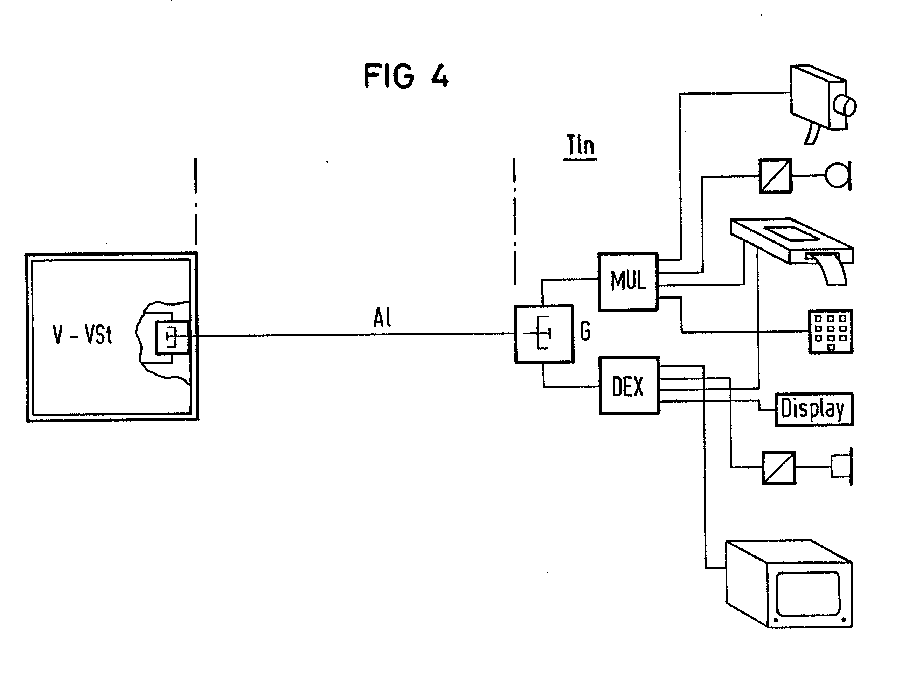

Der Frequenzmultiplexer bzw. -demultiplexer kann dann beispielsweise zusammen mit dem das Fernsprechband überdeckenden, etwa von 0,3 kHz bis 3,4 kHz reichenden Analog-Kommunikations-Kanal und dem oberhalb des Fernsprechbandes liegenden, beispielsweise einen 64- oder 80-kbit/s-Einheitskanal bildenden und beispielsweise etwa von 4 kHz bis 80 kHz reichenden Digital-Kommunikations-Kanal einen unterhalb des Analog-Kommunikations-Kanals liegenden, etwa bis 0,1 kHz reichenden Digitalsignalkanal und/oder einen oberhalb des Digital-Kommunikations-Kanals liegenden, etwa von 0,1 MHz bis 1 MHz reichenden Analog-Kanal oder auch einen oder auch mehrere weitere Digital-Kanäle bündeln bzw. auffächern. Auch hierbei ist die die Fernmelde-Teilnehmerstelle Tln mit der eine breitbandige Durchschaltung ermöglichenden Vermittlungsstelle verbindende Zweidraht-Anschlußleitung Al teilnehmerstellenseitig durch eine Breitbandgabelschaltung G abgeschlossen, die, wie oben bereits erwähnt wurde, eine Entkopplung der Übertragungssignale der beiden Übertragungsrichtungen bis hin zum Megahertzbereich zu bewirken vermag. Dies ermöglicht dann einer beispielsweise gemäß Fig. 4 mit Tastwahl und Display, langsamem Datengerät und Videoeinrichtungen ausgerüsteten Digital-Fernsprech-Teilnehmerstelle, neben einem — ggf. auch hilfskommunikationsunterstützten — Fernsprech-Digitalbetrieb im 64-kbit/s-Digital-Kommunikations-Einheitskanal und einem langsamen Datenbetrieb, z. B. Faksimilebetrieb, in dem das Fernsprechband überdeckenden 3-kHz-Analog-Kommunikations-Kanal auch eine Signalisierung von bzw. zu der Fernmelde-Teilnehmerstelle Tln in einem unterhalb des Analog-Kommunikations-Kanals liegenden Digitalsignalkanal, indem etwa (in an anderer Stelle (DE-OS 30 26 669) näher beschriebener Weise) in der Vermittlungsstelle der Fernspeisespannung ein unterhalb des Fernsprechbandes liegendes Trägersignal überlagert wird, das mit einem eine beim Teilnehmer auf einen Display sichtbar zu machende Information codiert darstellenden Digitalsignal moduliert wird; dabei können bei zweckentsprechender Wahl von Modulationsart bzw. Leitungscode sowohl im Teilnehmersignalkanal als auch im das Fernsprechband überdeckenden Analog-Kommunikationskanal als schließlich auch im darüberliegenden 64- oder 80-kbit/s-Digital-Kommunikationskanal die Signale in Basisbandlage übertragen werden. In einem oberhalb des 64-kbit/s-Digital-Kommunikations-Einheitskanals liegenden Analogsignalkanal ist Videokommunikation, beispielsweise Bewegtbildübertragung nach Bildfernsprecharm mit 1 MHz Bandbreite, ermöglicht.

In dem Ausführungsbeispiel nach Fig. 1 ist die Analog-/Digital-Fernmelde-Teilnehmerstelle Tln über die Zweidraht-Anschlußleitung Al an einen Eingang/Ausgang einer Zweidraht-Vermittlungsstelle A-VSt angeschlossen. Alternativ dazu kann die Fernmelde-Teilnehmerstelle gemäß der Erfindung aber auch an eine Vierdraht-Vermittlungsstelle V-VSt (in Fig. 4) angeschlossen sein, wozu die Zweidraht-Anschlußleitung dann auch am vermittlungsstellenseitigen Ende durch eine entsprechende Breitbandgabelschaltung abzuschließen ist, wie dies in Fig. 4 angedeutet ist.

In diesem Zusammenhang sei auch bemerkt, daß bei großer Leitungslänge der Zweidraht-Anschlußleitung Al auch eine ihrerseits jeweils mit einer Breitbandgabelschaltung abgeschlossene Verstärkerschaltung in die Zweidraht-Anschlußleitung Al eingefügt bzw. zwischen diese und eine Zweidraht-Vermittlungsstelle (A-VSt in Fig. 1) zwischengeschaltet oder einer Vierdraht-Vermittlungsstelle (V-VSt in Fig. 4) vorgeschaltet sein kann, ohne daß dies in den Zeichnungen näher dargestellt ist ; dies braucht hier auch nicht weiter verfolgt zu werden, da dies zum Verständnis der Erfindung nicht mehr erforderlich ist.

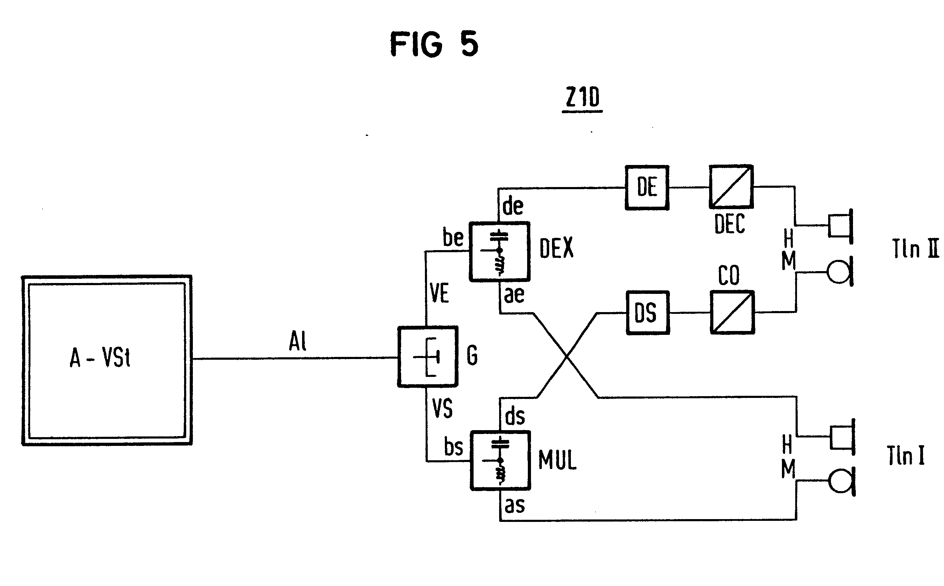

In Abweichung von der Darstellung in der eine mit Tastwahl und Display, langsamem Datengerät und Videoeinrichtungen ausgerüstete Digital-Fernsprech-Teilnehmerstelle zeigenden Fig. 4 können solche Terminaleinrichtungen auch verschiedenen Teilnehmern eines Gemeinschaftsanschlusses angehören, wobei die einzelnen Teilnehmer eines solchen Gemeinschaftsanschlusses auch Zugang zu gleichen Kommunikationsdiensten, z. B. Fernsprechen, haben können. Ein Beispiel hierfür zeigt Fig. 5, in der ein Zweieranschluß 1 ZD mit zwei Fernsprech-Teilnehmerstellen Tln I und Tln II dargestellt ist, wobei Schaltungseinrichtungen, die mit entsprechenden Schaltungseinrichtungen der Schaltungsanordnungen nach Fig. 1 bzw. Fig. 4 übereinstimmen, mit gleichgebliebenen Bezugszeichen versehen sind :

Gemäß Fig. 5 ist die an eine Vermittlungsstelle A-VSt angeschlossene Zweidraht-Anschlußleitung Al wiederum durch eine Breitbandgabelschaltung G abgeschlossen, der im Sende-Leitungszweig VS ein zumindest einen das Fernsprechband überdeckenden Analog-Kommunikations-Kanal und einen oberhalb des Fernsprechbandes liegenden Digital-Kommunikations-Kanal bündelnder Frequenzmultiplexer MUL vorgeschaltet und im Empfangs-Leitungszweig VE ein zumindest den das Fernsprechband überdeckenden Analog-Kommunikations-Kanal und den oberhalb des Fernsprechbandes liegenden Digital-Kommunikations-Kanal auffächernder Frequenzdemultiplexer DEX nachgeschaltet ist.

Mit dem Analogkommunikationskanal-Eingang as des Frequenzmultiplexers MUL ist der durch den Sprechstrom-Leitungszweig M gebildete Sendezweig der einen Fernsprech-Teilnehmerstelle Tln I verbunden, die mit der weiteren Fernmelde-Teilnehmerstelle Tln II zum Zweieran-

9

schluß Z1D zusammengefaßt ist ; mit dem Analogkommunikationskanal-Ausgang ae des Frequenzdemultiplexers DEX ist der den Empfangszweig bildende Hörstrom-Leitungszweig H der Fernmelde-Teilnehmerstelle Tln I verbunden. Die Fernmelde-Teilnehmerstelle Tln I kann damit in dem das Fernsprechband überdeckenden Analog-Kommunikations-Kanal in der üblichen Weise am Fernsprechverkehr teilnehmen.

Mit dem Digitalkommunikationskanal-Eingang ds des Frequenzmultiplexers MUL ist der durch einen über einen Sprachsignal-Coder CO geführten Sprechstrom-Leitungszweig M gebildete Sendezweig der zweiten Fernmelde-Teilnehmerstelle Tln II des Zweieranschlusses Z1D verbunden, und zwar über eine Digitalsignal-Sendeschaltung DS zum Aussenden von Sendesignalimpulsen mit einem oberhalb des Fernsprechbandes liegenden Frequenzspektrum ; der Digitalkommunikationskanal-Ausgang de des Frequenzdemultiplexers DEX ist über eine Digitalsignal-Empfangsschaltung DE zum Empfang von Empfangssignalimpulsen mit einem ebenfalls oberhalb des Fernsprechbandes liegenden Frequenzspektrum mit dem den Empfangszweig bildenden, über einen Sprachsignal-Decoder DEC geführten Hörstrom-Leitungszweig H der zweiten Fernmelde-Teilnehmerstelle Tln II des Zweieranschlusses Z1D verbunden. Damit kann dann die Fernmelde-Teilnehmerstelle Tln II in dem oberhalb des Fernsprechbandes liegenden Digital-Kommunikationskanal, beispielsweise 64 kbit/s-Einheitskanal, im Digital-Fernsprechbetrieb am Fernsprechverkehr teilnehmen. Hierfür — wie auch für den Analog-Fernsprechbetrieb der Fernsprech-Teilnehmerstelle Tln I des Zweieranschlusses Z1D gemäß Fig. 5 — gelten die diesbezüglichen, oben im Zusammenhang mit Fig. 1 bzw. Fig. 4 gemachten Ausführungen in entsprechender Weise, so daß hier von weiteren Erläuterungen abgesehen werden kann. Es sei lediglich noch besonders bemerkt, daß, ohne daß dies in Fig. 5 im einzelnen gezeigt ist, beide Fernsprech-Teilnehmerstellen Tln I und Tln II des Zweieranschlusses Z1D über die Speiseweiche der gemäß Fig. 3 ausgebildeten Breitbandgabel mit der erforderlichen Betriebsspannung ferngespeist sein können.

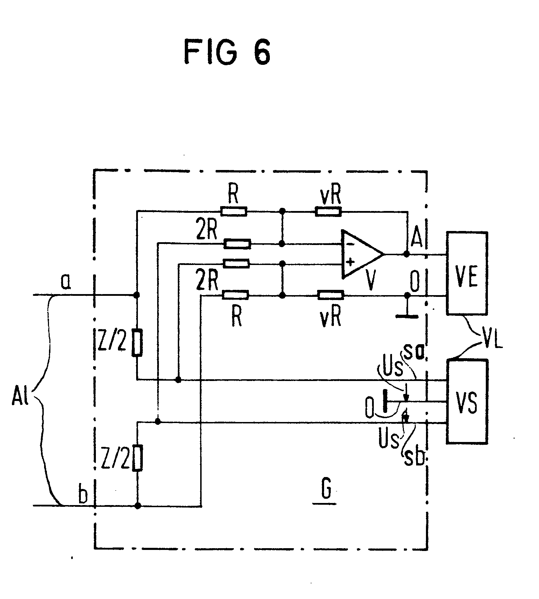

Abschließend sei noch ein Blick auf die Zeichnung Fig. 6 geworfen, die ein Prinzipschaltbild einer weiteren für eine Analog-/Digital-Fernmelde-Teilnehmerstelle gemäß der Erfindung zur Verfügung stehenden Breitbandgabelschaltung G zeigt :

In dieser Gabelschaltung G sind die beiden Adern a, b der (symmetrischen) Zweidraht-Anschlußleitung Al über die beiden Hälften einer den Wellenwiderstand der Zweidraht-Anschlußleitung Al zumindest angenähert nachbildenden Zweidrahtleitungs-Abschlußimpedanz Z/2 + Z/2 mit den beiden Ausgangsklemmen sa, sb des Sendezweiges VS der Vierdrahtleitung VL verbunden.

Dieser Sendezweig VS ist ebenfalls symmetrisch ausgebildet, d. h. seine beiden Ausgangsklemmen sa, sb führen gegenphasig zueinander die jeweilige Sendesignalspannung Us (bezogen auf einen ein Mittelpotential führenden Leitungssymetriepunkt O) ; der zwischen den beiden Ausgangsklemmen sa, sb bzw. zwischen jeweils einer Ausgangsklemme und dem Leitungssymmetriepunkt O auftretende Innenwiderstand des Sendezweiges VS möge zumindest näherungsweise vernachlässigbar klein sein. Tritt dann zwischen den beiden Ausgangsklemmen sa, sb des Sendezweigs VS der Vierdrahtleitung VL insgesamt eine Sendesignalspannung 2.Us auf, so wird diese durch die beiden Hälften Z/2, Z/2 der Zweidrahtleitungs-Abschlußimpedanz gerade so gedämpft, daß auf die beiden Zweidrahtleitungsadern a, b Sendesignalpotentiale jeweils des Betrages Us/2 mit entgegengesetzten Vorzeichen gelangen.

An die beiden Zweidrahtleitungsadern a, b sind außerdem über zwei Widerstände R die beiden Eingänge −, + eines zum Empfangszweig VE der Vierdrahtleitung VL führenden Operationsverstärkers V angeschlossen ; die beiden Widerstände mögen einen hohen Widerstandswert haben, so daß ihr Einfluß auf den Abschluß der Zweidrahtleitung Al zumindest näherungsweise zu vernachlässigen ist. Über zwei Widerstände 2R doppelt so hohen Widerstandswertes sind die beiden Eingänge −, + des Operationsverstärkers V außerdem in zu der Zuordnung zu den Zweidrahtleitungsadern a, b umgekehrter Zuordnung mit den beiden Ausgangsklemmen sb, sa des Sendezweigs VS der Vierdrahtleitung VL verbunden. Schließlich ist noch der invertierende Eingang (−) des Operationsverstärkers V mit dessen Ausgang und der nichtinvertierende Eingang (+) mit dem Leitungssymmetriepunkt O verbunden, und zwar jeweils über einen Widerstand vR mit einem zu den erstgenannten Widerständen (R) v-mal so großen Widerstandswert. Operationsverstärkerausgang A und Leitungssymmetriepunkt O bilden den Eingang des Empfangszweigs VE der Vierdrahtleitung VL. Hier tritt nun auf Empfangssignalpotentiale ± Ue/2, hin, die auf den Zweidrahtleitungsadern a, b (von deren fernem Ende her) ankommen und denen dort an sich die oben erwähnten Sendesignalpotentiale ± Us/2 überlagert sind, gerade nur eine reine Empfangssignalspannung v.Ue auf, während die zu den Eingangsklemmen des Operationsverstärkers V gelangenden Sendesignalkomponenten, sich jeweils gerade (zumindest angenähert) kompensieren.

## Ansprüche

1. An eine Zweidraht-Anschlußleitung anschließbare Analog-/Digital-Fernmelde-Teilnehmerstelle
— mit einem Frequenzmultiplexer bzw. -demultiplexer zur Bündelung bzw. Auffächerung eines das Fernsprechband überdeckenden Analog-Kommunikations-Kanals und eines oberhalb des Fernsprechbandes liegenden Digital-Kommunikations-Kanals

— und mit einer einen Zweidrahtleitungszweig in einen vierdrähtigen Sende-/Empfangs-Leitungszweig, insbesondere Sprechstrom-/Hörstrom-Leitungszweig, überführenden Gabelschaltung,

— wobei der die Zweidraht-Anschlußleitung (AI) abschließenden Gabelschaltung (G) im Sende-Leitungszweig (VS) ein zumindest den das Fernsprechband überdeckenden Analog-Kommunikations-Kanal und den oberhalb des Fernsprechbandes liegenden Digital-Kommunikations-Kanal bündelnder Frequenzmultiplexer (MUL) vorgeschaltet und im Empfangs-Leitungszweig (VE) ein zumindest den das Fernsprechband überdeckenden Analog-Kommunikations-Kanal und den oberhalb des Fernsprechbandes liegenden Digital-Kommunikations-Kanal auffächernder Frequenzdemultiplexer (DEX) nachgeschaltet ist, dadurch gekennzeichnet, daß der Sprechstrom-Leitungszweig (M) der Fernmelde-Teilnehmerstelle (Tln) über einen Coder (CO) und eine Digitalsignal-Sendeschaltung (DS) zum Aussenden von Sendesignalimpulsen mit einem oberhalb des Fernsprechbandes liegenden Frequenzspektrum mit dem Digitalkommunikationskanal-Eingang (ds) des Frequenzmultiplexers (MUL) und der Digitalkommunikationskanal-Ausgang (de) des Frequenzdemultiplexers (DEX) über eine Digitalsignal-Empfangsschaltung (DE) zum Empfang von Empfangssignalimpulsen mit einem ebenfalls oberhalb des Fernsprechbandes liegenden Frequenzspektrum und einen Decoder (DEC) mit dem Hörstrom-Leitungszweig (H) der Fernmelde-Teilnehmerstelle (Tln) direkt oder jeweils über durch manuelle Signalgabe und/oder nach Maßgabe eines Empfanges von Digitalsignalen umschaltbare Umschalteeinrichtungen (UM, UDS ; UH, UDE) verbunden ist, wobei bei der genannten direkten Verbindung mit dem Analogkommunikationskanal-Eingang (as) des Frequenzmultiplexers (MUL) der Sendezweig, insbesondere Sprechstrom-Leitungszweig (M), und mit dem Analogkommunikationskanal-Ausgang (ae) des Frequenzdemultiplexers (DEX) der Empfangszweig, insbesondere Hörstrom-Leitungszweig (H), einer mit der Fernmelde-Teilnehmerstelle (Tln II) zu einem Zweieranschluß (Z1D) zusammengefaßten weiteren Fernmelde-Teilnehmerstelle (Tln I) verbunden ist bzw. bei über die genannten Umschalteeinrichtungen (UM, UDS ; UH, UDE) verlaufender Verbindung mit dem Analogkommunikationskanal-Eingang (as) des Frequenzmultiplexers (MUL) der Ausgang und mit dem Analogkommunikationskanal-Ausgang (ae) des Frequenzdemultiplexers (DEX) der Eingang eines einem Datenendgerät (DEE) zugehörigen Fernsprechkanalmodems (MODEM) über entsprechende weitere Umschalteeinrichtungen (UAS, UAE) verbunden ist und über die genannten Umschalteeinrichtungen (UAS, UM, UDS ; UAE, UH, UDE) alternativ mit dem Analogkommunikationskanal-Eingang (as) des Frequenzmultiplexers (MUL) der Sprechstrom-Leitungszweig (M) und mit dem Analogkommunikationskanal-Ausgang (ae) des Frequenzdemultiplexers (DEX) der Hörstrom-Leitungszweig (H) der Fernmelde-Teilnehmerstelle (Tln) verbindbar ist, während mit dem Digitalkommunikationskanal-Eingang (ds) des Frequenzmultiplexers (MUL) eine einem Digitalkommunikations-Endgerät (DEE) zugeordnete Digitalsignal-Sendeschaltung (DS) zum Aussenden von Sendesignalimpulsen mit einem im wesentlichen oberhalb des Fernsprechbandes liegenden Frequenzspektrum und mit dem Digitalkommunikationskanal-Ausgang (de) des Frequenzdemultiplexers (DEX) eine einem Digitalkommunikations-Endgerät (DEE) zugeordnete Digitalsignal-Empfangsschaltung (DE) zum Empfang von Empfangssignalimpulsen mit einem ebenfalls oberhalb des Fernsprechbandes liegenden Frequenzspektrum verbindbar ist.

2. Fernmelde-Teilnehmerstelle nach Anspruch 1, dadurch gekennzeichnet, daß der Frequenzmultiplexer (MUL) bzw. -demultiplexer (DEX) zusammen mit dem das Fernsprechband überdeckenden Analog-Kommunikations-Kanal und dem oberhalb des Fernsprechbandes liegenden Digital-Kommunikations-Kanal einen unterhalb des Analog-Kommunikations-Kanals liegenden Digitalsignalkanal und/oder einen oberhalb des Digital-Kommunikations-Kanals liegenden Analog- oder auch Digitalkanal bündelt bzw. auffächert.

3. Fernmelde-Teilnehmerstelle nach Anspruch 1 oder 2, dadurch gekennzeichnet, daß in der Breitbandgabelschaltung (G) parallel zur Serienschaltung einer vom Sende-Leitungszweig (VS) gesteuerten Stromquelle (I) und eines Widerstandes (R1) die aus einem zweiten Widerstand (R2) und einer Restimpedanz (Z2) gebildete Zweidrahtleitungs-Abschlußimpedanz (Z2, R2) geschaltet ist und der durch die beiden Widerstände (R1, R2) gebildeten Serienschaltung die Serienschaltung zweier weiterer Resistanzen (R3, R4) parallelgeschaltet ist, wobei der Empfangs-Leitungszweig (VE) durch die zwischen dem Verbindungspunkt (e) der beiden Resistanzen (R3, R4) und dem Verbindungspunkt (a) der beiden Widerstände (R1, R2) auftretende Spannung gesteuert wird.

4. Fernmelde-Teilnehmerstelle nach Anspruch 1 oder 2, dadurch gekennzeichnet, daß in der Breitbandgabelschaltung (G) an die über eine den halben Wellenwiderstand der symmetrischen Zweidraht-Anschlußleitung (AI) zumindest angenähert nachbildende Impedanz (Z/2) mit der einen Klemme (sa) der beiden zueinander gegenphasig jeweils die Sendesignalspannung (Us) liefernden Ausgangsklemmen (sa, sb) des zumindest wechselstrommäßig niederohmigen Sendezweigs (VS) der Vierdrahtleitung (VL) verbundene eine Zweidrahtleitungsader (a) über einen Widerstand hohen Widerstandswerts (R) die eine Eingangsklemme (−) eines zum Empfangszweig (VE) der Vierdrahtleitung (VL) führenden Operationsverstärkers (V) angeschlossen ist, die außerdem über einen doppelt so großen Widerstand (2R) mit der anderen Ausgangsklemme (sb) des

Sendezweigs (VS) verbunden ist, und daß an die über eine ebenfalls den halben Wellenwiderstand der Zweidraht-Anschlußleitung (Al) zumindest angenähert nachbildende Impedanz (Z/2) mit dieser anderen Ausgangsklemme (sb) des Sendezweigs (VS) der Vierdrahtleitung (VL) verbundene andere Zweidrahtleitungsader (b) über einen Widerstand ebenfalls des genannten hohen Widerstandswerts (R) die andere Eingangsklemme (+) des Operationsverstärkers (V) angeschlossen ist, die außerdem über einen wiederum doppelt so hohen Widerstand (2R) mit der genannten einen Ausgangsklemme (sa) des Sendezweigs (VS) verbunden ist, wobei der invertierende Eingang (−) des Operationsverstärkers (V) mit dessen Ausgang und der nichtinvertierende Elngang (+) des Operationsverstärkers (V) mit dem Leitungssymmetriepunkt (O) jeweils über einen Widerstand mit einem v-mal so hohen Widerstandswert (vR) verbunden ist, worin v der Verstärkungsfaktor des Operationsverstärkers (V) ist.

5. Fernmelde-Teilnehmerstelle nach einem der Ansprüche 1 bis 4, gekennzeichnet durch eine Digitalsignal-Sendeschaltung (DS) zum Aussenden von Sendesignalimpulsen zu bestimmten Zeitpunkten bzw. mit einem vorgegebenen Schwerpunkt ihres Frequenzspektrums und eine Digitalsignal-Empfangsschaltung (DE) zum Empfangen von Empfangssignalimpulsen zu anderen Zeitpunkten bzw. mit einem anderen Schwerpunkt ihres Frequenzspektrums.

6. Fernmelde-Teilnehmerstelle nach einem der Ansprüche 1 bis 5, gekennzeichnet durch eine gescrambelte Pseudoternär-Halbschritt-Signalimpulse (AMI-Signalimpulse) aussendende Digitalsignal-Sendeschaltung (DS) und/oder eine solche Signalimpulse empfangende Digitalsignal-Empfangsschaltung (DE).

7. Fernmelde-Teilnehmerstelle nach einem der vorhergehenden Ansprüche, dadurch gekennzeichnet, daß sie über eine Zweidraht-Anschlußleitung (Al) an einen Eingang/Ausgang einer Zweidraht-Vermittlungsstelle (A-VSt) angeschlossen sind.

8. Fernmelde-Teilnehmerstelle nach einem der Ansprüche 1 bis 6, dadurch gekennzeichnet, daß sie über eine Zweidraht-Anschlußleitung (Al) mit diese vermittlungsstellenseitig abschließender weiterer Breitbandgabelschaltung an einen Eingang/Ausgang einer Vierdraht-Vermittlungsstelle (V-VSt) angeschlossen ist.

**Claims**

1. An analogue/digital telecommunications subscriber station which can be connected to a two-wire connection line :
— with a frequency multiplexer demultiplexer for bunching and fanning-out an analogue-communications channel which covers the telephone band, and a digital-communications channel located above the telephone band,
— and with a hybrid circuit which converts a two-wire line branch into a four-wire transmitting/receiving line branch, in particular a speech current/audible current line branch ;
— where the hybrid circuit (G) which terminates the two-wire connection line (Al) is preceded in the transmitting-line branch (VS) by a frequency multiplexer (MUL) which bunches together at least the analogue-communications channel which covers the telephone band and the digital-communications channel located above the telephone band, and is followed in the receiving-line branch (VE) by a frequency demultiplexer (DEX) which fans out at least the analogue-communications channel which covers the telephone band and the digital-communications channel located above the telephone band, characterised in that the speech current line branch (M) of the telecommunications subscriber station (Tln) is connected to the digital communications channel input (ds) of the frequency multiplexer (MUL), via a coder (CO) and a digital signal transmitting circuit (DS) to transmit transmitted signal pulses with a frequency spectrum located above the telephone band, and the digital communications channel output (de) of the frequency demultiplexer (DEX) is connected to the audible current line branch (H) of the telecommunications subscriber station (Tln) via a digital signal receiving circuit (DE) to receive received signal pulses with a frequency spectrum likewise located above the telephone band, and via a decoder (DEC), either directly or via switch-over devices (UM, UDS ; UH, UDE) which can be switched over by manual signalling and/or in accordance with the reception of digital signals ; where if the connections are direct as referred to above, the analogue communications channel input (as) of the frequency multiplexer (MUL) is connected to the transmitting branch, in particular the speech current line branch (M), and the analogue communications channel output (ae) of the frequency demultiplexer (DEX) is connected to the receiving branch, in particular the audible current line branch (H) of a further telecommunications subscriber station (Tln I) combined with the telecommunications subscriber station (Tln II) to form a two-party terminal (ZID) ; and if the connections are conducted via the aforementioned switch-over devices (UM, UDS ; UH, UDE), the analogue communications channel input (as) of the frequency multiplexer (MUL) is connected to the output, and the analogue communications channel output (ae) of the frequency demultiplexer (DEX) is connected to the input of a telephone channel modem (MODEM) assigned to a data terminal device (Dee) via further corresponding switch-over devices (UAS, UAE), and via the aforementioned switch-over devices (UAS, UM, UDS ; UAE, UH, UDE) alternatively the analogue communications channel input (as) of the frequency multiplexer (MUL) can be connected to the speech current line branch (M) and the analogue communications channel output (ae) of the frequency demultiplexer (DEX) can be connected to the audible current line branch (H) of the telecommunications subscriber station (Tln), whereas the digital communications channel input (ds) of the frequency multiplexer (MUL) can be connected to a digital signal transmitting circuit (DS) assigned to a digital communications terminal device (DEE) to transmit transmitted signal pulses with a frequency spectrum located substantially above the telephone band, and the digital communications channel output (de) of the frequency demultiplexer (DEX) can be connected to a digital signal receiving circuit (DE) assigned to a digital communications terminal device (DEE) to receive received signal pulses with a frequency spectrum located above the telephone band.

2. A telecommunications subscriber station as claimed in Claim 1, characterised in that the frequency multiplexer (MUL) and demultiplexer (DEX), together with the analogue communications channel which covers the telephone band and the digital communications channel located above the telephone band, bunches and fans out a digital signal channel located below the analogue communications channel and/or an analogue or digital channel located above the digital communications channel.

3. A telecommunications subscriber station as claimed in Claim 1 or 2, characterised in that in the wide-band hybrid circuit (G) the two-wire line terminal impedance (Z2, R2) formed by a second resistor (R2) and a residual impedance (Z2) is connected in parallel with the series combination of a current source (I) controlled by the transmitting line branch (VS) and a resistor (R1), and the series arrangement formed by the two resistors (R1, R2) is connected in parallel with the series arrangement of two further resistors (R3, R4), where the receiving line branch (VE) is controlled by the voltage which occurs between the connection point (e) of the two resistors (R3, R4) and the connection point (a) of the two resistors (R1, R2).

4. A telecommunications subscriber station as claimed in Claim 1 or 2, characterised in that in the wide-band hybrid circuit (G) the one two-wire line wire (a) is connected via an impedance (Z/2) which at least approximately simulates half the surge impedance of the symmetrical two-wire connection line (AI) to the first terminal (sa) of the two output terminals (sa, sb), each of which supply in phase-opposition to one another, the transmitting signal voltage (Us) of the transmitting branch (Vs) of the four-wire line (VL), which is low-ohmic at least in respect of a. c., and the wire (a) is also connected via a resistor which possesses a high resistance value (R) to the first input terminal (−) of an operational amplifier (V) which leads to the receiving branch (VE) of the four-wire line (VL), which input terminal (−) is also connected via a resistor (2R) having double the resistance value of the resistor (R) to the other output terminal (sb) of the transmitting branch (VS), and that the other two-wire line (b) connected via an impedance (Z/2) which likewise at least approximately simulates half the surge impedance of the two-wire connection line (AI) to this other output terminal (sb) of the transmitting branch (VS) of the four-wire line (VL) is also connected via a resistor which likewise possesses the aforementioned high resistance value (R) to the other input terminal (+) of the operational amplifier (V), which input terminal (+) is also connected via a resistor (2R) of double the value, to the aforementioned first output terminal (sa) of the transmitting branch (VS), where the inverting input (−) of the operational amplifier (V) is connected to the output thereof and the non-inverting input (+) of the operational amplifier (V) is connected to the line symmetry point (O) via a resistor whose resistance value (vR) is v-times as high, where v is the amplification factor of the operational amplifier (V).

5. A telecommunications subscriber station as claimed in one of the Claims 1 to 4, characterised by a digital signal transmitting circuit (DS) which serves to transmit signal pulses at specific times and/or with a predetermined centre of its frequency spectrum, and further characterised by a digital signal receiving circuit (DE) which serves to receive signal pulses at other times and/or with a different spectrum centre frequency.

6. A telecommunications subscriber station as claimed in one of the Claims 1 to 5, characterised by a digital signal-transmitting circuit (DS) which emits scrambled pseudo-ternary half-element signal pulses (AMI-signal pulses) and/or a digital signal receiving circuit (DE) which receives signal pulses of this kind.

7. A telecommunications subscriber station as claimed in one of the preceding Claims, characterised in that it is connected via a two-wire connection line (AI) to an input/output of a two-wire exchange (A-VSt).

8. A telecommunications subscriber station as claimed in one of the Claims 1 to 6, characterised in that it is connected via a two-wire connection line (AI) with a further wide-band hybrid circuit which terminates the latter on the exchange side , to an input/output of a four-wire exchange (V-VSt).

## Revendications

1. Poste d'abonné analogique/numérique pour un système de télécommunications, susceptible d'être relié à une ligne bifilaire,

— avec un multiplexeur et démultiplexeur pour concentrer ou pour étaler en éventail un canal de communication analogique recouvrant la bande téléphonique et un canal de communication numérique situé au-dessus de la bande téléphonique,

— et avec un termineur servant au passage d'une branche de ligne bifilaire à une branche de ligne émission/réception quadrifilaire, en particulier une branche de ligne à courant de conversation/d'écoute,

— du type dans lequel on prévoit en amont du termineur situé à la fin de la ligne de branchement bifilaire (A1), dans la branche de ligne émission (VS), un multiplexeur de fréquence (MUL) concentrant au moins le canal analogique recouvrant la bande téléphonique et le canal de communication numérique situé au-dessus de la bande téléphonique, et en aval du termineur, dans la branche de ligne (VE), un démultiplexeur de fréquence (DEX) qui étale en éventail au moins un canal de communication analogique qui recouvre la bande téléphonique et le canal de communication numérique qui se situe au-dessus de la bande téléphonique, caractérisé par le fait que la branche de ligne à courant de conversation (M) du poste d'abonné (Tln) est reliée, par l'intermédiaire d'un codeur (CO) et d'un circuit d'émission de signaux numériques (DS) pour l'émission d'impulsions de signaux d'émission à spectre de fréquence situé au-dessus de la bande téléphonique, à l'entrée (ds) du démultiplexeur de fréquence (MUL) du canal de communication numérique, et que la sortie (de) du démultiplexeur de fréquence (DEX) du canal de communication numérique est reliée, par l'intermédiaire d'un circuit de réception (DE) des signaux numériques, pour la réception d'impulsions de signaux de réception à spectre de fréquence également situé au-dessus de la bande téléphonique, et d'un décodeur (DEC), à la branche de ligne (H) à courant d'écoute du poste d'abonné (Tln), soit directement soit respectivement par émission manuelle de signaux et/ou par l'intermédiaire de dispositifs de commutation (UM, UDS ; UH, UDE) commutables en fonction de la réception de signaux numériques, la réalisation étant telle que dans le cas de ladite liaison directe, à l'entrée (as) du multiplexeur de fréquence (MUL) du canal de commutation analogique, est reliée la branche émission, en particulier la branche de ligne à courant de conversation (M), et à la sortie (ae) du démultiplexeur de fréquence (DEX) du canal de communication analogique, est reliée la branche réception, en particulier la branche de ligne (H) à courant d'écoute, d'un autre poste d'abonné (Tlnl) assemblée avec le poste d'abonné (Tlnll) pour former un branchement double, alors que dans le cas de la liaison qui passe par lesdits dispositifs de commutation (UM, UDS ; UH, UDE), à l'entrée (as) du multiplexeur de fréquence (MUL) du canal de communication analogique, est reliée la sortie et à la sortie (ae) du démultiplexeur de fréquence (DEX) du canal de communication analogique est reliée l'entrée d'un modem (MODEM) d'un canal téléphonique associé à un terminal de données, par l'intermédiaire d'autres dispositifs de commutation correspondants (UAS, UAE) et que par l'intermédiaire desdits dispositifs de commutation (UAS, UM, UDS ; UAE, UH, UDE), sont reliées alternativement, à l'entrée (as) du multiplexeur de fréquence (MUL) du canal de communication analogique, la branche de ligne à courant de conversation (M), et à la sortie (AE) du démultiplexeur de fréquence (DEX) du canal de communication analogique, la branche de ligne à courant d'écoute (H), alors qu'à l'entrée (ds) du multiplexeur de fréquence (MUL) du canal de communication numérique, est susceptible d'être relié un circuit émission (DS) de signaux numériques, associé à un terminal (DEE) de communication numérique et servant à émettre des impulsions de signaux d'émission à spectre de fréquence situé sensiblement au-dessus de la bande téléphonique, et qu'à la sortie (de) du démultiplexeur de fréquence (DEX) du canal de communication numérique, est susceptible d'être relié un circuit de réception (DE) de signaux numériques, associé à un terminal de communication numérique (DEE) et servant à la réception d'impulsions de signaux de réception à spectre de fréquence également situé au-dessus de la bande téléphonique.

2. Poste d'abonné pour un système de télécommunications selon la revendication 1, caractérisé par le fait que le multiplexeur de fréquence (MUL) ou le démultiplexeur de fréquence (DEX) concentre ou étale en éventail, avec le canal de communication analogique qui recouvre la bande téléphonique et le canal de communication numérique qui se situe au-dessus de la bande téléphonique, un canal de signaux numériques qui se situe en dessous du canal de communication analogique et/ou un canal analogique ou aussi numérique qui se situe au-dessus du canal de communication numérique.

3. Poste d'abonné pour un système de télécommunications selon la revendication 1 ou 2, caractérisé par le fait que dans le termineur à large bande (G) et en parallèle sur un circuit série qui est constitué par une source de courant (I) qui est commandée par la branche de ligne d'émission (VS) et par une résistance (R1), est branchée l'impédance de sortie bifilaire (Z2, R2) formée par une seconde résistance (R2) et par une impédance résiduelle (Z2), et qu'en parallèle sur le circuit série qui est formé par les deux résistances (R1, R2) est monté le circuit série de deux autres résistances (R3, R4), la branche de ligne de réception (VE) étant commandée par la tension qui apparaît entre le point de liaison (e) des deux résistances (R3, R4) et le point de liaison (a) des deux résistances (R1, R2).

4. Poste d'abonné pour un système de télécommunications selon la revendication 1 ou 2, caractérisé par le fait que dans le termineur à large bande (G) est reliée à l'impédance qui simule au moins approximativement la moitié de l'impédance caractéristique de la ligne de branchement bifilaire symétrique (A1), par l'une (sa) des deux bornes de sortie (sa, sb), qui fournissent en opposition de phases la tension de sortie (Us), de la branche émission (VS) faiblement ohmique, au moins du point de vue du courant alternatif, de la ligne quadrifilaire (VL), par une résistance (R) de grande valeur ohmique, une borne (−) d'un amplificateur opérationnel (V) menant à la branche réception (VE) de la ligne quadrifilaire qui est, en outre, reliée par l'intermédiaire d'une résistance (2R) deux fois aussi grande, à l'autre borne de sortie (sb) de la branche émission, et qu'à l'autre fil (b) du conducteur bifilaire, qui est également relié, par l'intermédiaire de l'impédance (Z/2) qui simule au moins approximativement la moitié de l'impédance caractéristique de la ligne de branchement bifilaire, à cette borne de sortie (sb) de la branche émission (VS) de la ligne quadrifilaire (VL), est reliée, par l'intermédiaire d'une résistance (R) possédant ladite valeur élevée, l'autre borne (+) de l'amplificateur opérationnel, laquelle est, en outre, reliée par l'intermédiaire d'une résistance (2R) de valeur ohmique double, à ladite borne de sortie (sa) de la branche émission (VS), l'entrée inverseuse (−) de l'amplificateur opérationnel (V) étant, avec sa sortie et son entrée non inverseuses (+) de l'amplificateur opérationnel (V) reliée au point de symétrie (O) de la ligne, respectivement par l'intermédiaire d'une résistance avec une valeur ohmique vingt fois plus grande (vR) v étant le facteur d'amplification de l'amplificateur opérationnel.

5. Poste d'abonné pour un système de télécommunications selon l'une des revendications 1 à 4, caractérisé par un circuit à émission (DS) de signaux numériques, pour l'émission d'impulsions de signaux d'émission à des instants déterminés ou avec un centre de gravité prédéterminé de son spectre de fréquence, et par un circuit de réception de signaux numériques (DE) pour la réception d'impulsions de signaux de réception à d'autres instants, ou avec un autre centre de gravité de son spectre de fréquence.

6. Poste d'abonné pour un système de télécommunications selon l'une des revendications 1 à 5, caractérisé par un circuit d'émission de signaux numériques (DS) émettant des impulsions de signaux pseudo-ternaires à demi-pas et embrouillés (impulsions de signaux-AMI) et/ou un circuit de réception de signaux numériques (DE) qui reçoit de telles impulsions de signaux.

7. Poste d'abonné pour un système de télécommunications selon l'une des revendications précédentes, caractérisé par le fait qu'il est relié, par l'intermédiaire d'une ligne de branchement bifilaire (A1) à une entrée/sortie d'un central bifilaire (A-VSt).

8. Poste d'abonné pour un système de télécommunications selon l'une des revendications 1 à 6, caractérisé par le fait qu'il est relié, par l'intermédiaire d'une ligne de branchement bifilaire (A1), à termineur supplémentaire à large bande qui ferme cette ligne du côté du central, à une entrée/sortie d'un central quadrifilaire (V-VSt).

# FIG 1

ALD  DSD  MHD

ald  dsd  mhd  esd

DEE

dsd

Tln

DE  UDE  ssd

de

be  DEX  DEC  UH

ae  H

ds  dsd  mhd

DS  UDS

A-VSt  Al  NSW  G  CO  UM  M

VE

VS  ald

UAE

MODEM

bs  ald  eld

MUL  Dee

ds  sld

as  ald

UAS

0 050 748

## FIG 2

## FIG 3

# FIG 4

Tln

V – VSt

Al

G

MUL

DEX

Display

0 050 748

FIG 5

Z10

A – VS1

AI

VE

VS

G

DEX

be

de

ae

MUL

bs

ds

as

DE

DS

DEC

CO

H

M

H

M

Tln II

Tln I

# FIG 6